# EUROPEAN PATENT SPECIFICATION

(11) **EP 1 509 909 B1**
(45) Date of publication and mention of the grant of the patent: **19.06.2013**
(21) Application number: 03715841.7
(22) Date of filing: 14.04.2003
(51) Int. Cl.: G11B 7/007

(54) **OPTICAL DISC HAVING A PLURALITY OF RECORDING LAYERS, AND RECORDING METHOD AND REPRODUCING METHOD THEREFOR**
OPTISCHER DATENTRÄGER MIT MEHREREN AUFZEICHNUNGSSCHICHTEN UND AUFZEICHNUNGSVERFAHREN UND WIEDERGABEVERFAHREN DAFÜR
DISQUE OPTIQUE A PLUSIEURS COUCHES D'ENREGISTREMENT, ET PROCEDES D'ENREGISTREMENT ET DE REPRODUCTION CORRESPONDANTS

(30) Priority: 30.05.2002 KR 2002030301
(43) Date of publication of application: 02.03.2005
(73) Proprietor: Samsung Electronics Co., Ltd., Suwon-si, Gyeonggi-do, 443-742 (KR)
(72) Inventor: LEE, Kyung-Geun, 122-1002 Sibeom Hanshin Apt., Seongnam-si, 463-050 Gyeongi-do (KR); PARK, In-Sik, 615-801 Shinnamushil, 967-2, Suwon-si, 442-470 Gyeonggi-do (KR); RO, Myung-Do, Yongin-si, 449-900 Gyeonggi-do (KR); YOON, Du-Seop, 315-601 Sibeom Danji Hanyang Apt., Seongnam-si, 463-050 Gyeonggi-do (KR); PARK, Chang-Min, Suwon-si, 442-371 Gyeonggi-do (KR)
(74) Representative: Robinson, Ian Michael
(86) International application number: PCT/KR2003/000755
(87) International publication number: WO 2003/102937

(56) References cited:
- EP-A- 1 168 315
- EP-A1- 0 986 051
- EP-A2- 0 715 301
- JP-A- 2002 042 349
- KR-A- 2001 011 557
- US-A- 5 737 287
- US-A- 5 881 032
- US-A1- 2001 033 543
- ECMA: STANDARDIZING INFORMATION AND COMMUNICATION SYSTEMS: "Standard ECMA-272, 2nd edition: 120 mm DVD Rewritable Disk (DVD-RAM)", STANDARD ECMA-272, XX, XX, no. 272, 1 June 1999 (1999-06-01), pages 1-99, XP002186767,

## Description

### Technical Field

The present invention relates to the field of optical discs, and more particularly, to an optical disc having at least two recording layers and a recording method and reproducing method therefor.

### Background Art

Compact disc (CDs) and digital versatile disc (DVDs) are representative optical discs, which are information storage media widely used at present. However, as production and distribution of digital contents requiring a relatively large amount of data, such as audio/video (AV) data, rapidly increase, an optical disc having a higher recording capacity is needed for recording the digital content.
Among methods for increasing the recording capacity of an optical disc, there is a method in which 2 or more layers for recording user data are formed in the optical disc. However, reliable recording and reproducing is more difficult when there are 2 recording layers than when there is only 1 recording layer, because, for example, in order to separately read information recorded on each recording layer, a laser beam should be controlled more precisely, and reading error may occur more frequently due to stains on the disc surface.

### Disclosure of the Invention

To solve the above problems, it is an objective of the present invention to provide an optical disc having a data structure such that when the optical disc has at least 2 recording layers, data can be recorded on and reproduced from the optical disc more reliably, and a recording method and reproducing method therefor.

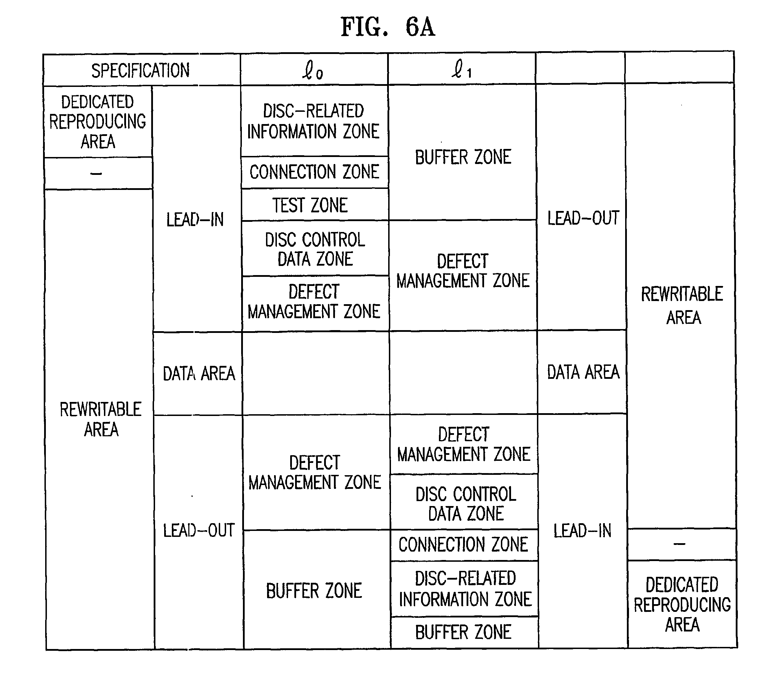

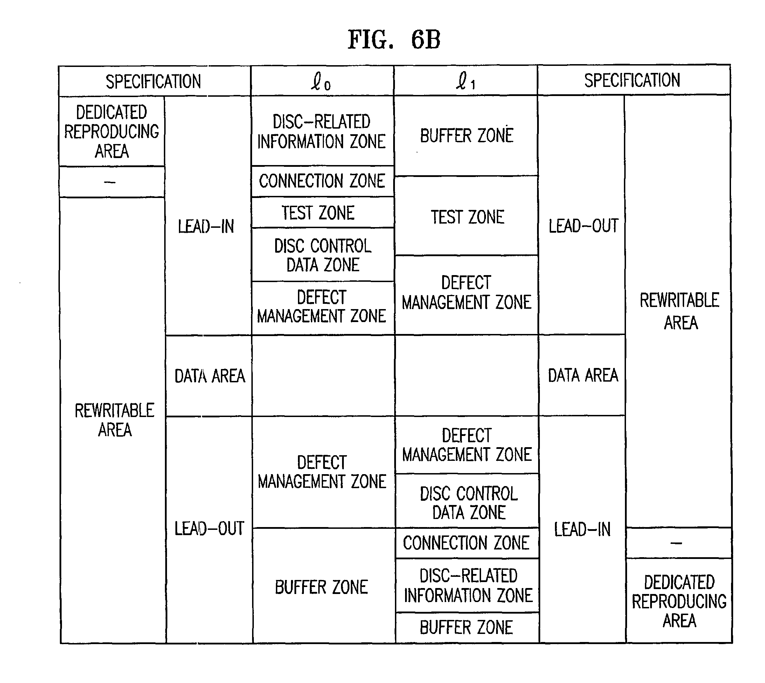

According to the present invention there is provided an optical disc as set forth in claim 1 appended hereto. The embodiment as set forth in claim 1 is the embodiment as shown in figure 6. Other embodiments are presented in the description and figures only as background art or examples which are useful for understanding the invention.

Also according to the present invention there is provided a method for recording user data on or reproducing user data from an optical disc, as set forth in claim 14 appended hereto and an apparatus as set forth in claim 15.

In the related art, EP-A-1168315 discloses a hybrid disc having one read-only layer and one writable recording layer. The read-only layer has a structure that is compatible completely with DVD-ROM. The writable layer is compatible with the recording/reproducing characteristics of a writable DVD specification.

Also, in the related art, US-A-5, 881,032 discusses an optical disc having at least two recording layers placed one over the other in such a manner that information recorded on each layer is optically readable from one side of the disc. Tracks of each layer are arranged in a spiral pattern, and adjacent layers have opposite winding directions when viewed from the same side of the disc. Each of the recording layers has a lead-in area, a data area and a lead-out area. The pre-characterising portions of the attached independent claims are based on this document.

### Brief Description of the Drawings

FIG. 1 is a schematic diagram of an optical disc according to a preferred embodiment of the present invention;
FIG. 2 is a reference diagram showing the recording/reproducing direction of the optical disc of FIG. 1;
FIG. 3 is a diagram of the structure of data in a lead-in/out area of FIG. 2;
FIG. 4 shows a first embodiment of the data structure recorded on the optical disc of FIG. 1;
FIG. 5 shows a second embodiment of the data structure recorded on the optical disc of FIG. 1;
FIGS. 6A and 6B show third embodiments of the data structure recorded on the optical disc of FIG. 1;
FIGS. 7A and 7B show fourth embodiments of the data structure recorded on the optical disc of FIG. 1;
FIG. 8 is a schematic diagram of an optical disc according to another preferred embodiment of the present invention;
FIG. 9 is a reference diagram showing the recording/reproducing direction of the optical disc of FIG. 8;
FIG. 10 shows a first embodiment of the data structure recorded on the optical disc of FIG. 8;
FIG. 11 shows a second embodiment of the data structure recorded on the optical disc of FIG. 8;
FIG. 12 shows a first embodiment of a dedicated-reproducing area and rewritable area;
FIG. 13 shows a second embodiment of a dedicated-reproducing area and rewritable area;
FIG. 14 shows a third embodiment of a dedicated-reproducing area and rewritable area;
FIG. 15 shows a fourth embodiment of a dedicated-reproducing area and rewritable area;
FIGS. 16 through 20 are reference diagrams explaining a wobble signal modulation method; and
FIG. 21 is a flowchart explaining a recording/reproducing method according to a preferred embodiment of the present invention.

### Best mode for carrying out the Invention

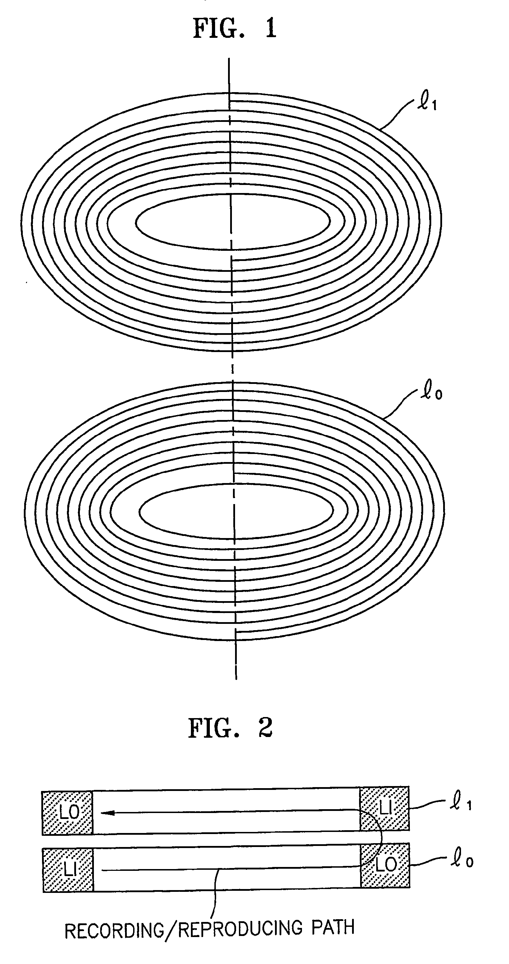

Referring to FIG. 1, an optical disc according to a preferred embodiment of the present invention has a first recording layer ℓ0 and a second recording layer ℓ1. On the first recording layer ℓ0 and the second recording layer ℓ1, respective spiral tracks having opposite directions are formed.

FIG. 2 shows the recording/reproducing direction of the optical disc of FIG. 1. Referring to FIG. 2, on each of the first recording layer ℓ0 and the second recording layer ℓ1, there are a lead-in area LI, a data area, and a lead-out area LO. Shaded areas are lead-in areas LI and lead-out areas LO, and the remaining areas are data areas on which user data are recorded. Data recorded in the lead-in areas and lead-out areas will be explained later in detail.

Recording and/or reproducing data is performed from an inner circumference to an outer circumference of the disc by rotating the disc counterclockwise when the disc is seen from the source of a laser beam. Accordingly, the recording/reproducing path of the optical disc of FIG. 1 follows an opposite track path (OTP) method in which the path begins in the lead-in area of the first recording layer ℓ0, extends through the lead-out area of the first recording layer ℓ0, and the lead-in area of the second recording layer ℓ1, and ends in the lead-out area of the second recording layer ℓ1. In the present invention, the lead-in area means an area of a recording layer where recording/reproducing in that recording layer begins, and the lead-out area means an area of a recording layer where recording/reproducing in that recording layer ends. Accordingly, the lead-in area and lead-out area are formed at the outer or inner circumference of the disc. In the present embodiment, the lead-in area of the first recording layer ℓ0 is formed at the inner circumference of the disc, and the lead-out area is formed at the outer circumference of the disc, while the lead-in area of the second recording layer ℓ1 is formed at the outer circumference of the disc, and the lead-out area is formed at the inner circumference.

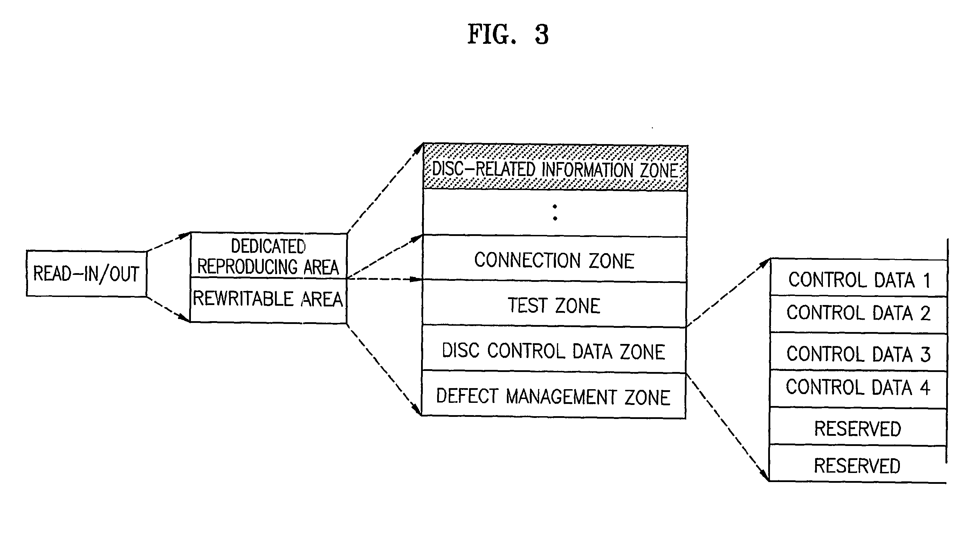

FIG. 3 is a diagram of the structure of data in a lead-in/out area of FIG. 2. Referring to FIG. 3, the lead-in/out area comprises a dedicated-reproducing area and a rewritable area. A connection zone is formed between the dedicated-reproducing area and the rewritable area. The dedicated-reproducing area is an area on which dedicated-reproducing data which, once recorded, are not deleted are recorded in advance. The rewritable area is an area on which rewritable user data are recorded.

The dedicated-reproducing area has a disc-related information zone. In the disc-related information zone, basic information on the disc is recorded. For example, in the disc-related information zone, a reference code for easier adjustment of an optical pickup, such as the location of a focus, and control data, such as the type of the disc, the size of the disc, the version number, the recording density, the number of recording layers, and sector numbers indicating data areas, may be recorded. The disc-related information may be recorded in only one of the first recording layer ℓ0 and the second recording layer ℓ1.

The connection zone plays the role of a transition area located between the dedicated-reproducing area and the rewritable area.

The rewritable area comprises a test zone, a disc control data zone, and a defect management zone. The test zone includes a disc test zone and/or a drive test zone. The disc test zone and drive test zone are for testing a recording pulse, etc. In the disc control data zone, control data for user data that are newly recorded in a data area are recorded. In the defect management zone, information for processing or managing defects in the disc is recorded.

In the disc control data zone, a variety of control data may be recorded. In the present embodiment, the disc control data zone comprises a plurality of areas in which predetermined control data are recorded, and reserved areas for future use. An example of control data is drive information. Drive information is information on a drive which was used in recording data, and includes manufacturer information, an identifier, etc.

However, when the lead-in/out area of a predetermined recording layer has the above-described structure, the lead-out/in area of the same recording layer has only a defect management zone and a buffer zone. The purpose of the defect management zone is the same as described above, and the buffer zone indicates a kind of a transition area, that is, a predetermined area or a boundary between areas.

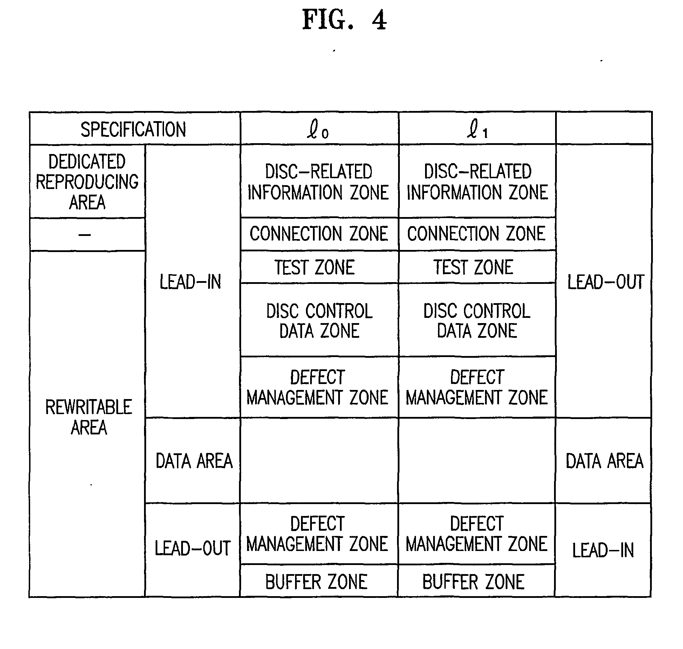

FIG. 4 shows a first embodiment of the structure of data recorded on the optical disc of FIG. 1. Referring to FIG. 4, both the first recording layer ℓ0 and the second recording layer ℓ1 have respective disc-related information zones. That is, a disc-related information zone is in each of the lead-in area of the first recording layer ℓ0 and the lead-out area of the second recording layer ℓ1. In the disc-related information zones, information on respective recording layers may be recorded separately, or together.

The remaining areas, that is, the connection zones, the test zones, the disc control data zones, and defect management zones, of the two layers are arranged in an identical order in the radial direction of the disc.

In addition, there is a buffer zone in each of the lead-out area of the first recording layer ℓ0 and the lead-in area of the second recording layer ℓ1, so that the buffer zones meet the first recording layer ℓ0 on the recording/reproducing path.

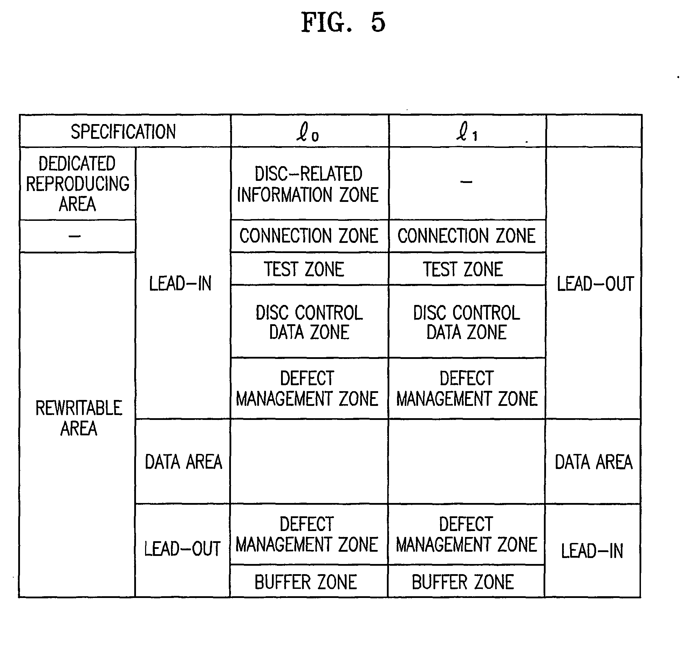

FIG. 5 shows a second embodiment of the structure of data recorded on the optical disc of FIG. 1. Referring to FIG. 5, a disc-related information zone is only on the first recording layer ℓ0. In the disc-related information zone, information on both the first recording layer ℓ0 and the second recording layer ℓ1 is recorded.

The remaining areas, that is, the connection zones, the test zones, the disc control data zones, and the defect management zones, of the two layers are arranged in an identical order in the radial direction of the disc. Also, as in FIG. 4, there is a buffer zone in each of the lead-out area of the first recording layer ℓ0 and the lead-in area of the second recording layer ℓ1, so that the buffer zones meet each other on the recording/reproducing path.

FIGS. 6A and 6B show third embodiments of the structure of data recorded on the optical disc of FIG. 1. Referring to FIGS. 6A and 6B, both the first recording layer ℓ0 and the second recording layer ℓ1 have respective disc-related information zones. That is, a disc-related information zone is in each of the lead-in area of the first recording layer ℓ0 and the lead-out area of the second recording layer ℓ1. However, the disc-related information zones, the connection zones, the disc control data zones, and the defect management zones of the two layers are arranged in the opposite order in the radial direction of the disc. As an exception, a test zone may be located only on the first recording layer ℓ0 as shown in FIG. 6a, or a test zone may be located on each of the two layers at a physically identical location (inner circumference or outer circumference) as shown in FIG. 6b. Meanwhile, there is a buffer zone in each of the lead-out area of the first recording layer ℓ0 and the lead-in area of the second recording layer ℓ1, so that the buffer zones meet each other on the recording/reproducing path.

The disc-related information zone of the first recording layer ℓ0 and the disc-related information zone of the second recording layer ℓ1 are recorded on the inner circumference and the outer circumference, respectively, of the optical disc. Accordingly, even when information cannot be correctly read from the inner/outer circumference of the disc because of dust or fingerprints on the disc surface, that information can be read from the disc-relation information zone on the outer/inner circumference. This structure improves the reliability of recording/reproducing. Moreover, when information on both recording layers is recorded in the disc-related information zone, the reliability of recording/reproducing is further improved.

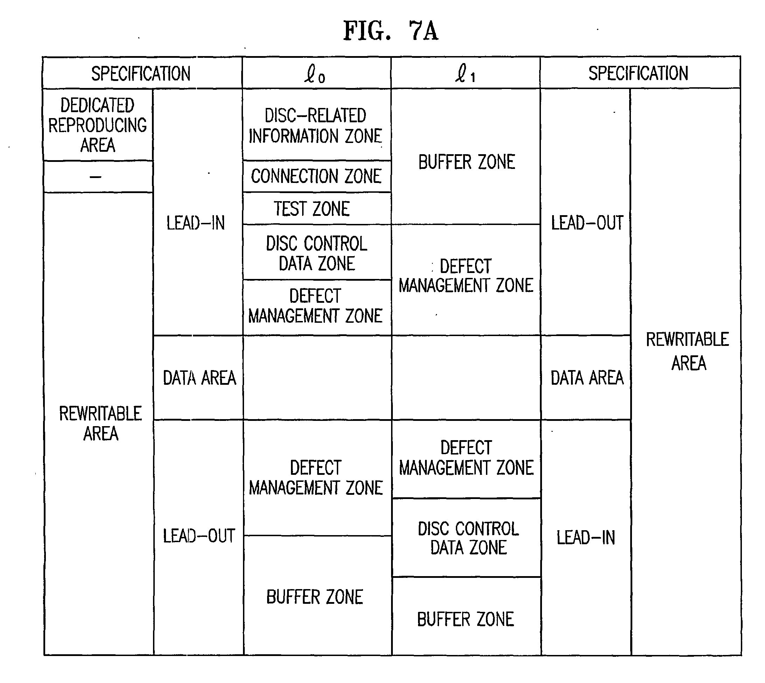

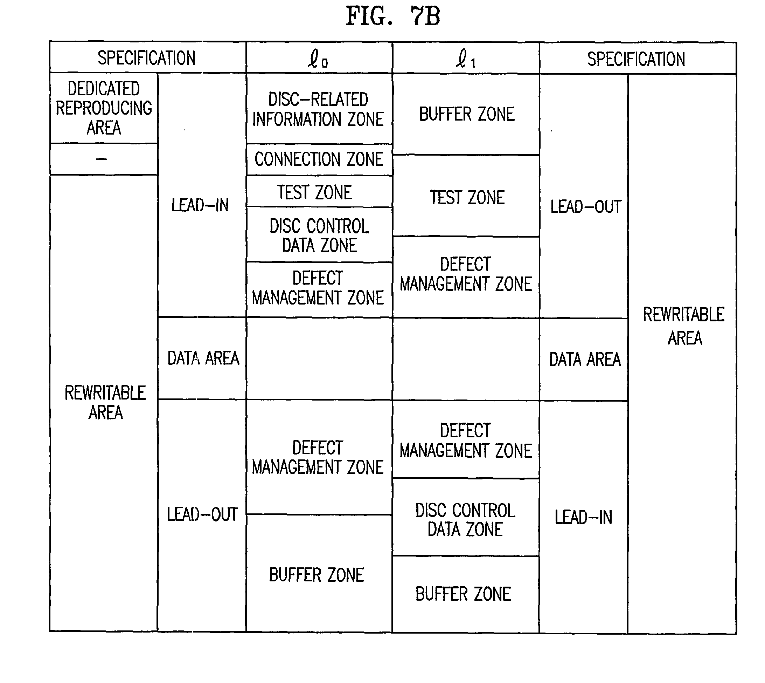

FIGS. 7A and 7B show fourth embodiments of the structure of data recorded on the optical disc of FIG. 1.

Referring to FIGS. 7A and 7B, the first recording layer ℓ0 has both a dedicated-reproducing area and a rewritable area. In the disc-related information zone of the dedicated-reproducing area, information on both the first recording layer ℓ0 and the second recording layer ℓ1 is recorded. The first recording layer ℓ0 has the same data structure as explained referring to FIG. 3, while the second recording layer ℓ1 has a different data structure. That is, both the lead-in area and lead-out area of the second recording layer ℓ1 are formed as rewritable areas. More specifically, the lead-in area of the second recording layer ℓ1 comprises a defect management zone, a disc control data zone, and a buffer zone, and the lead-out area of the second recording layer ℓ1 comprises a defect management zone, and a buffer zone. However, a test zone is located only on the first recording layer ℓ0 as shown in FIG. 7a, or a test zone may be located at a physically identical location (inner circumference or outer circumference) on each of the two layers as shown in FIG. 7b. Meanwhile, the buffer zone of the lead-out area of the first recording layer ℓ0 and the buffer zone of the lead-in area of the second recording layer ℓ1 are arranged in identical locations in the radial direction of the disc.

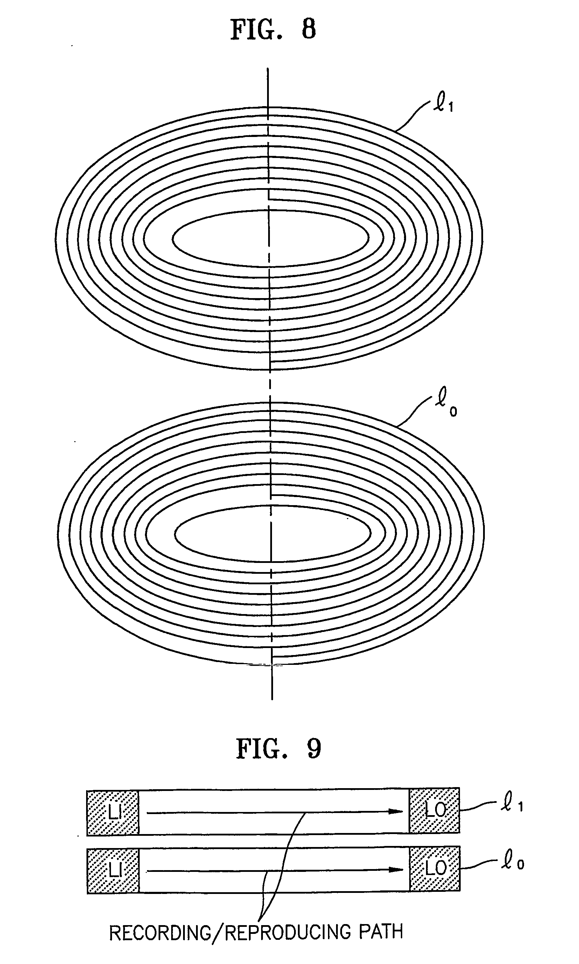

FIG. 8 is a schematic diagram of an optical disc according to another preferred embodiment of the present invention. Referring to FIG. 8, the optical disc has a first recording layer ℓ0 and a second recording layer ℓ1. On the first recording layer ℓ0 and the second recording layer ℓ1, respective spiral tracks having an identical winding direction are formed.

FIG. 9 shows the recording/reproducing direction of the optical disc of FIG. 8. Referring to FIG. 9, on each of the first recording layer ℓ0 and the second recording layer ℓ1, there are a lead-in area LI, a data area, and a lead-out area LO. Shaded areas are lead-in areas LI and lead-out areas LO, and the remaining areas are data areas on which user data are recorded. Data recorded in the lead-in areas and lead-out areas will be explained later in detail.

Recording and/or reproducing data is performed from an inner circumference to an outer circumference of the disc by rotating the disc counterclockwise when the disc is seen from the source of a laser beam. The recording/reproducing path of the optical disc of FIG. 9 follows a parallel track path (PTP) method in which the path begins in the lead-in area of the first recording layer ℓ0 and ends in the lead-out area of the first recording layer ℓ0, and begins again in the lead-in area of the second recording layer ℓ1, and ends in the lead-out area of the second recording layer ℓ1. As described above referring to FIG. 2, the lead-in area in the present invention means an area of a recording layer where recording/reproducing in that recording layer begins, and the lead-out area means an area of a recording layer where recording/reproducing in that recording layer ends. Accordingly, in the present embodiment, the lead-in areas of the first recording layer ℓ0 and the second recording layer ℓ1 are formed at the inner circumferences of the disc, and the lead-out areas of the first recording layer ℓ0 and the second recording layer ℓ1 are formed at the outer circumferences of the disc.

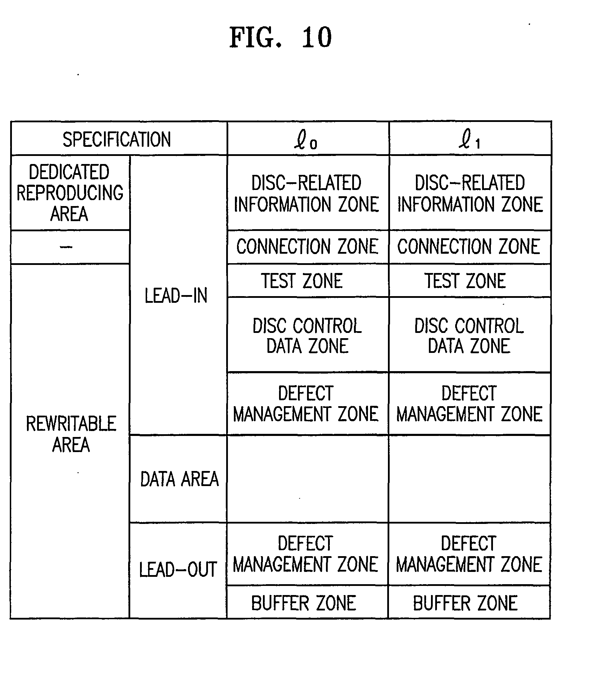

FIG. 10 shows a first embodiment of the structure of data recorded on the optical disc of FIG. 8. Hereinafter, the meanings of a disc-related information zone, a connection zone, a disc control data zone, and a defect management zone are the same as explained above referring to FIG. 3.

Referring to FIG. 10, both the first recording layer ℓ0 and the second recording layer ℓ1 have respective disc-related information zones. That is, a disc-related information zone is in each of the lead-in areas of the first recording layer ℓ0 and the second recording layer ℓ1. In the disc-related information zones, information on respective recording layers may be recorded separately, or together. The remaining areas, that is, the connection zones, the test zones, the disc control data zones, and defect management zones, of the two layers are arranged in an identical order in the radial direction of the disc. In addition, in each of the lead-out area of the first recording layer ℓ0 and the lead-in area of the second recording layer ℓ1, there is a buffer zone.

However, the test zone may be formed on only one of the first recording layer ℓ0 and the second recording layer ℓ1.

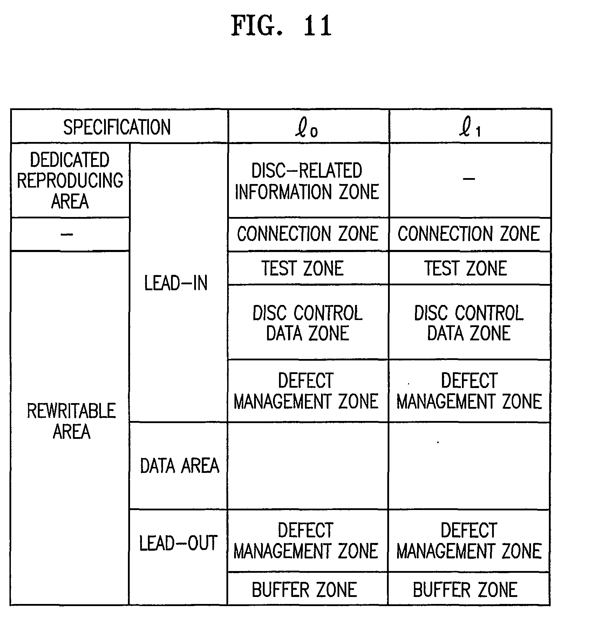

FIG. 11 shows a second embodiment of the structure of data recorded on the optical disc of FIG. 8. Referring to FIG. 11, a disc-related information zone is only on the first recording layer ℓ0. In the disc-related information zone, information on both the first recording layer ℓ0 and the second recording layer ℓ1 is recorded.

The remaining areas, that is, the connection zones, the test zones, the disc control data zones, and the defect management zones, of the two layers are arranged in an identical order in the radial direction of the disc. Also, as in FIG. 10, there is a buffer zone in each of the lead-out area of the first recording layer ℓ0 and the lead-in area of the second recording layer ℓ1, so that the buffer zones meet each other on the recording/reproducing path.

Examples of a dedicated-reproducing area and a rewritable area formed in the lead-in/out area having the data structure described above will now be explained. However, a connection zone and a buffer zone are formed such that the zones have physical characteristics that can be distinguished from neighboring zones. For example, a connection zone and a buffer zone may be formed as mirror areas. If a neighboring zone is formed as a wobble track, the connection zone and buffer zone may be formed as wobble tracks with wobble signals different from the wobble signal recorded in the neighboring zone.

However, the test zone may be formed on only one of the first recording layer ℓ0 and the second recording layer ℓ1.

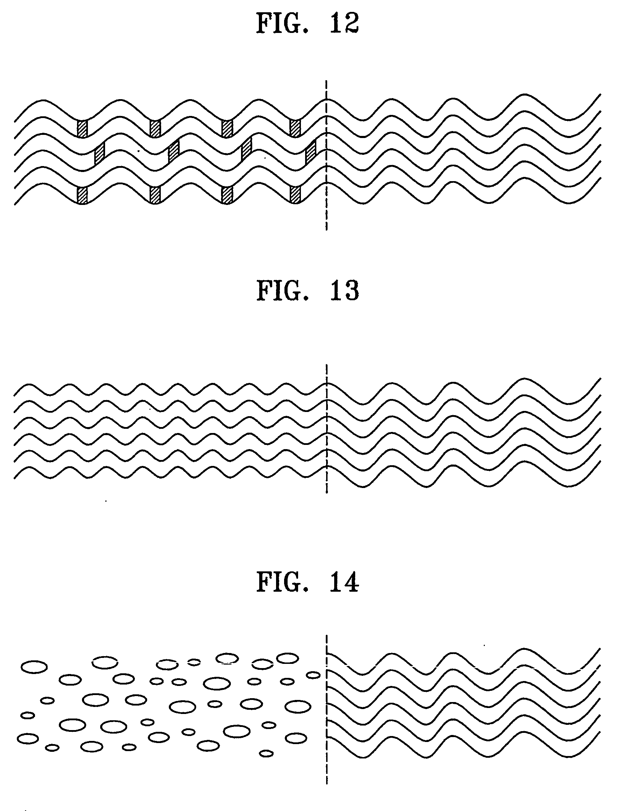

FIG. 12 shows a first embodiment of a dedicated-reproducing area and rewritable area. As shown in FIG. 12, the dedicated-reproducing area and rewritable area are formed as wobble tracks. Here, data on the dedicated-reproducing area are recorded as land pre-pits, and data on the rewritable area are loaded on a wobble signal and then recorded.

FIG. 13 shows a second embodiment of a dedicated-reproducing area and rewritable area. As shown in FIG. 13, the dedicated-reproducing area is formed as a high-frequency wobble track on which a high-frequency wobble signal is recorded, and the rewritable area is formed as a low-frequency wobble track on which a low-frequency wobble signal is recorded.

In FIGS. 12 and 13, since both the dedicated-reproducing area and the rewritable area are formed as wobble tracks, the physical shapes are uniform on the entire disc. Accordingly, even when the disc has two or more recording layers, the reproduction characteristics are good.

FIG. 14 shows a third embodiment of a dedicated-reproducing area and rewritable area. As shown in FIG. 14, the dedicated-reproducing area is formed as a pre-pit area on which data are recorded as pre-pits, and the rewritable area is formed as a wobble track on which a wobble signal containing corresponding data is recorded. Since the rewritable area is also formed as a wobble track like a data area, the areas have a more uniform physical shape. Accordingly, even when the disc has two or more recording layers, the reproduction characteristics are good.

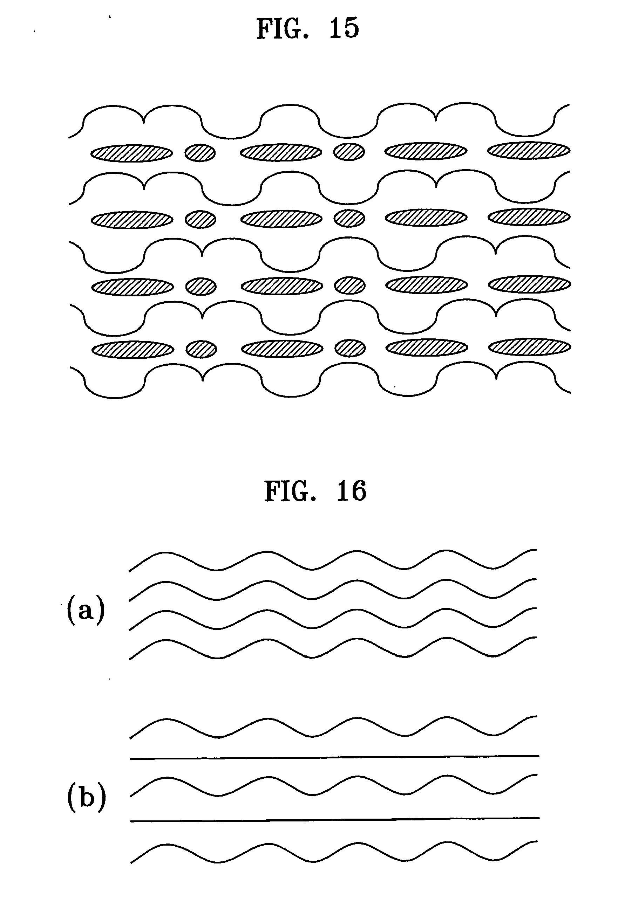

FIG. 15 shows a fourth embodiment of a dedicated-reproducing area and rewritable area. As shown in FIG. 15, the dedicated-reproducing area is formed as a wobble track on which a wobble signal containing corresponding data is recorded, and the data corresponding to the rewritable area is recorded as recording marks in the wobble track of the dedicated-reproducing area. Since in one area, the data of the dedicated-reproducing area is recorded as a wobble signal, and the data of the rewritable area is recorded as recording marks, the data area in which user data are recorded becomes relatively wider. Accordingly, this embodiment has a structure which is advantageous in increasing the recording capacity of the disc.

Meanwhile, the wobble track described above may have wobbles formed on both side walls of a groove and land as shown in FIG. 16(a), or may have wobbles formed on only one side wall of a land or groove as shown in FIG. 16(b).

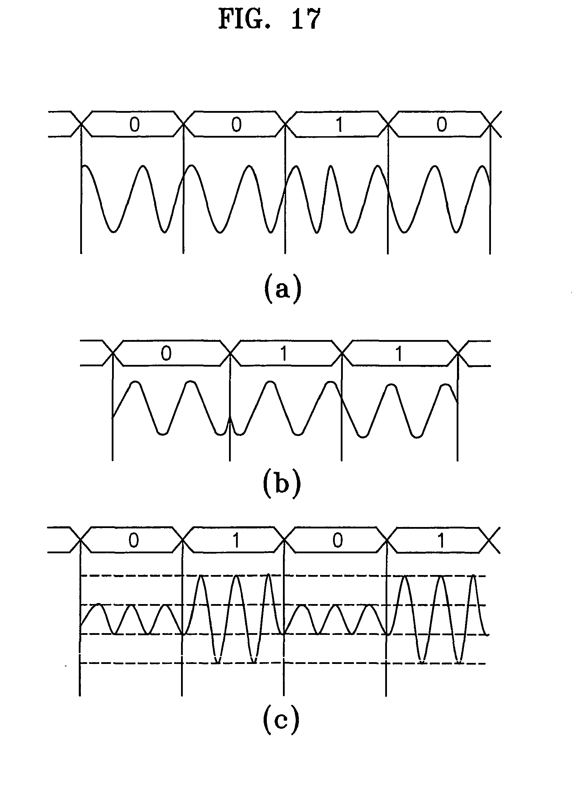

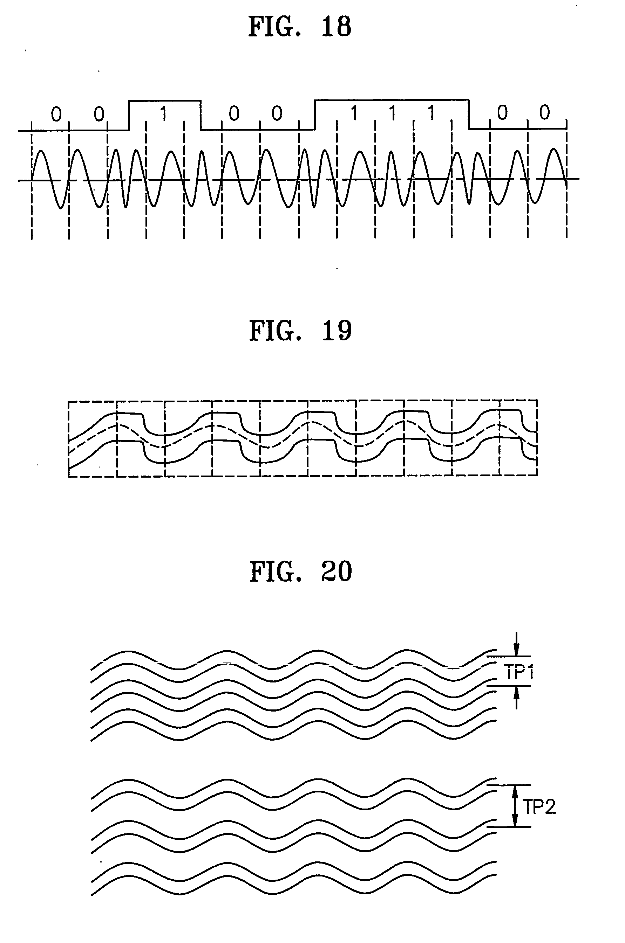

In addition, in a wobble signal read from a wobble track, data is loaded by being modulated by any of the following methods. FIG. 17(a) shows a frequency modulation method in which the frequency of a wobble signal is modulated between two different values to represent data bits having a logic value "0" and data bits having a logic value "1". FIG. 17(b) shows a phase modulation method in which the phase of a wobble signal is modulated by reversal to represent data bits having a logic value "0" and data bits having a logic value "1". FIG. 17(c) shows an amplitude modulation method in which the amplitude of a wobble signal is modulated between two different values to represent data bits having a logic value "0" and data bits having a logic value "1". FIG. 18 shows a minimum shift keying (MSK) method in which only the frequency of a partial interval of a continuous wobble signal changes. FIG. 19 shows a saw tooth wobble (STW) method in which a wobble signal having a saw tooth shape is recorded. In the saw tooth wobble signal, a logic value is determined as "0" or "1" according to the direction of the slope of the saw tooth. In addition, as shown in FIG. 20, by forming different track pitches (TP1, TP2) of wobble tracks on which a wobble signal is recorded, crosstalk between tracks can be reduced.

Based on the structure described above, a recording/reproducing method according to the present invention will now be explained.

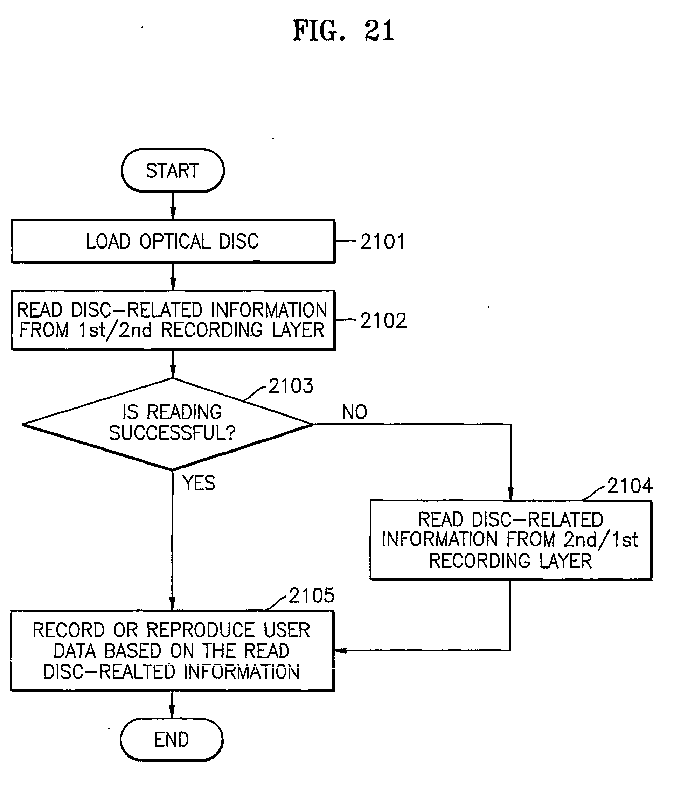

FIG. 21 is a flowchart explaining a recording/reproducing method according to a preferred embodiment of the present invention. Referring to FIG. 21, an optical disc is loaded into the recording/reproducing apparatus in step 2101. An optical pickup of the recording/reproducing apparatus reads disc-related information from a disc-related information zone located on one of the first recording layer ℓ0 and the second recording layer ℓ1 in step 2102. It is then determined whether or not the disc-related information is read successfully in step 2103. If reading was unsuccessful, the optical pickup of the recording/reproducing apparatus reads disc-related information from a disc-related information zone in the other layer of the first recording layer ℓ0 and the second recording layer ℓ1 in step 2104. Based on the disc-relation information, the recording/reproducing apparatus records user data in a data area or reproduces user data recorded from the data area in step 2105. If the disc-related information is read successfully without error in step 2103, based on the information, user data is recorded on or reproduced from the optical disc in step 2105.

In an optical disc having 3 or more recording layers, in which information on all recording layers is recorded in each of disc-related information zones formed at different locations on respective recording layers, if reading information from a disc-related information zone of one recording layer fails, the information can be read from disc-related information zones of other recording layers, thereby improving the reliability of recording/reproducing.

As described above, according to the present invention, even in an optical disc having two or more recording layers, data can be recorded and reproduced more reliably.

Although the present invention has been described with reference to preferred embodiments thereof, it will be apparent to those skilled in the art that various modifications to the embodiments set forth herein may be made within the scope of the present invention as defined by the appended claims.

## Claims

1. An optical disc comprising at least a first recording layer (L0) and a second recording layer (L1), each of which has a lead-in area, a data area, and a lead-out area,
**characterised in that**:
the lead-in area included in the inner circumference of the first recording layer (L0) comprises:
a dedicated-reproducing area in which disc-related information of both of the first recording layer (L0) and the second recording layer (L1) is recorded,
a rewritable disc control data zone in which control data for reproducing user data recorded in the data area is recorded, and
a connection zone between the dedicated-reproducing area and the disc control data zone, and
the lead-in are included in the outer circumference of the second recording layer (L1) comprises:
a dedicated-reproducing area in which disc-related information of both of the first recording layer (L0) and the second recording layer (L1) is recorded,
a rewritable disc control data zone in which control data for reproducing user data recorded in the data area is recorded, and
a connection zone between the dedicated-reproducing area and the disc control data zone.

2. The optical disc of claim 1, wherein a test zone, and a defect management zone are formed in the rewritable area.

3. The optical disc of claim 2, wherein a defect management zone is formed in the lead-out area of the recording layer whose lead-in area has the disc-related information zone, or in the lead-in area of the recording layer whose lead-out area has the disc-related information zone.

4. The optical disc of claim 2, wherein a spiral track formed in the data area of each recording layer has a winding direction opposite to the winding direction of a previous recording layer.

5. The optical disc of claim 3, wherein a defect management zone is formed in each of the first lead-out area and the second lead-out area.

6. The optical disc of claim 5, wherein a buffer zone is formed adjacent to the defect management zone in each of the first lead-out area and the second lead-out area.

7. The optimal disc of claim 5, wherein the first lead-in area, the first data area, and the first lead-out area are arranged in the opposite order as the second lead-out area, the second data area, and the second lead-in area, in the radial direction of the disc.

8. The optical disc of claim 7, wherein a buffer zone is formed in each of the first lead-out area and the second lead-in area such that the buffer zone is adjacent to the first lead-out area and the second lead-in area on a reproducing path.

9. The optical disc of claim 1, wherein the dedicated-reproducing area is formed as wobble tracks in which data corresponding to the area are recorded as land pre-pits, and the disc control data zone is formed as wobble tracks in which a wobble signal containing corresponding data is recorded.

10. The optical disc of claim 1, wherein the dedicated-reproducing area is formed as a pre-pitted area in which data corresponding to the area are recorded as pre-pits, and the disc control data zone is formed with wobble tracks in which a wobble signal containing corresponding data is recorded.

11. The optical disc of claim 1, wherein the dedicated-reproducing area is formed as wobble tracks in which a wobble signal containing corresponding data is recorded, and the data corresponding to the disc control data zone are recorded as recording marks in the wobble tracks of the dedicated-reproducing area.

12. The optical disc of any preceding claim, wherein the dedicated-reproducing area is formed as high-frequency wobble tracks in which a high-frequency wobble signal containing corresponding data is recorded, and the disc control data zone is formed as low-frequency wobble tracks in which a low-frequency wobble signal containing corresponding data is recorded.

13. The optical disc of claim 12, wherein the data contained in the wobble signal are contained after being modulated by at least one of frequency modulation, amplitude modulation, phase modulation, and saw tooth modulation.

14. A method for recording user data on or reproducing user data from an optical disc having at least first and second recording layers (L0, L1),
wherein a lead-in area included in the inner circumference of the first recording layer (L0) comprises a dedicated-reproducing area in which the disc-related information for both the first recording layer and the second recording layer is recorded, a rewritable disc control data zone in which the data for reproducing the user data recorded the data area is recorded, and a connection zone between the dedicated-reproducing area and the disc control data zone;
wherein a lead-in area included in the outer circumference of the second recording layer (L1) comprises a dedicated-reproducing area in which the disc-related information for both the first recording layer and the second recording layer is recorded, a rewriteable disc control data zone in which the data for reproducing the user data recorded the data area is recorded, and a connection zone between the dedicated-reproducing area and the disc control data zone;
the method **characterised by**:
reading disc-related information from one of the lead-in area of the first recording layer (L0) or the lead-out layer of the second recording layer (L1), by reading the disc-related information for both the first recording layer and the second recording layer, and data for reproducing user data recorded in the disc control data zone of the respective one of the first recording layer and the second recording layer;
if the disc-related information is not correctly read, reading the disc-related information from a disc-related information zone formed on the other of the lead-in area of the first recording layer or the lead-out area of the second recording layer; and
based on the read disc-related information, recording user data on or reproducing user data from the optical disc.

15. A recording and reproducing apparatus, comprising means adapted to perform the method of claim 14.

## Patentansprüche

1. Optische Disk, die mindestens eine erste Aufzeichnungsschicht (L0) und eine zweite Aufzeichnungsschicht (L1) umfasst, welche jeweils einen Einlaufbereich, einen Datenbereich und einen Auslaufbereich haben,
**dadurch gekennzeichnet, dass**:
der Einlaufbereich, der in der inneren Peripherie der ersten Aufzeichnungsschicht (L0) enthalten ist, Folgendes umfasst:
einen zugeordneten Reproduktionsbereich, in dem diskbezogene Informationen sowohl der ersten Aufzeichnungsschicht (L0) als auch der zweiten Aufzeichnungsschicht (L1) aufgezeichnet sind,
einen Kontrolldatenbereich einer wiederbeschreibbaren Disk, in dem Kontrolldaten zum Reproduzieren von Benutzerdaten, die im Datenbereich aufgezeichnet sind, aufgezeichnet werden, und
einen Verbindungsbereich zwischen dem zugeordneten Reproduktionsbereich und dem Disk-Kontrolldatenbereich, und
der Einlaufbereich, der in der äußeren Peripherie der zweiten Aufzeichnungsschicht (L1) enthalten ist, Folgendes umfasst:
einen zugeordneten Reproduktionsbereich, in dem diskbezogene Informationen sowohl der ersten Aufzeichnungsschicht (L0) als auch der zweiten Aufzeichnungsschicht (L1) aufgezeichnet sind,
einen Kontrolldatenbereich einer wiederbeschreibbaren Disk, in dem Kontrolldaten zum Reproduzieren von Benutzerdaten, die im Datenbereich aufgezeichnet sind, aufgezeichnet werden, und
einen Verbindungsbereich zwischen dem zugeordneten Reproduktionsbereich und dem Disk-Kontrolldatenbereich.

2. Optische Disk nach Anspruch 1, wobei ein Testbereich und ein Defektmanagementbereich im wiederbeschreibbaren Bereich gebildet werden.

3. Optische Disk nach Anspruch 2, wobei ein Defektmanagementbereich im Auslaufbereich der Aufzeichnungsschicht gebildet ist, deren Einlaufbereich den diskbezogenen Informationsbereich hat, oder im Einlaufbereich der Aufzeichnungsschicht, deren Auslaufbereich den diskbezogenen Informationsbereich hat.

4. Optische Disk nach Anspruch 2, wobei eine spiralförmige Spur, die im Datenbereich jeder Aufzeichnungsschicht gebildet ist, eine Windungsrichtung hat, die der Windungsrichtung einer vorherigen Aufzeichnungsschicht entgegengesetzt ist.

5. Optische Disk nach Anspruch 3, wobei ein Defektmanagementbereich sowohl im ersten Auslaufbereich als auch im zweiten Auslaufbereich gebildet ist.

6. Optische Disk nach Anspruch 5, wobei ein Pufferbereich neben dem Defektmanagementbereich sowohl im ersten Auslaufbereich als auch im zweiten Auslaufbereich gebildet ist.

7. Optische Disk nach Anspruch 5, wobei der erste Einlaufbereich, der erste Datenbereich und der erste Auslaufbereich in entgegengesetzter Reihenfolge wie der zweite Auslaufbereich, der zweite Datenbereich und der zweite Einlaufbereich in radialer Richtung der Disk angeordnet sind.

8. Optische Disk nach Anspruch 7, wobei ein Pufferbereich sowohl im ersten Auslaufbereich als auch im zweiten Einlaufbereich derart gebildet ist, dass der Pufferbereich neben dem ersten Auslaufbereich und dem zweiten Einlaufbereich auf einem Reproduktionsweg liegt.

9. Optische Disk nach Anspruch 1, wobei der zugeordnete Reproduktionsbereich als Wobbelspur gebildet ist, in dem Daten, die dem Bereich entsprechen, als Land-Prepits aufgezeichnet werden, und der Disk-Kontrolldatenbereich als Wobblespuren gebildet ist, in dem ein Wobblesignal, das die entsprechenden Daten enthält, aufgezeichnet wird.

10. Optische Disk nach Anspruch 1, wobei der zugeordnete Reproduktionsbereich als prepitted Bereich gebildet ist, in dem Daten, die dem Bereich entsprechen, als Prepits aufgezeichnet werden, und der Disk-Kontrolldatenbereich mit Wobblespuren gebildet ist, in denen ein Wobblesignal, das die entsprechenden Daten enthält, aufgezeichnet wird.

11. Optische Disk nach Anspruch 1, wobei der zugeordnete Reproduktionsbereich als Wobblespuren gebildet ist, in denen ein Wobblesignal, das die entsprechenden Daten enthält, aufgezeichnet wird, und die Daten, die dem Disk-Kontrolldatenbereich entsprechen, als Aufzeichnungsmarken in den Wobblespuren des zugeordneten Reproduktionsbereichs aufgezeichnet werden.

12. Optische Disk nach einem der vorherigen Ansprüche, wobei der zugeordnete Reproduktionsbereich als hochfrequente Wobblespuren gebildet ist, in denen ein Hochfrequenz-Wobblesignal, das die entsprechenden Daten enthält, aufgezeichnet wird, und der Disk-Kontrolldatenbereich als niederfrequente Wobblespuren gebildet ist, in denen ein Niederfrequenz-Wobblesignal, das die entsprechenden Daten enthält, aufgezeichnet wird.

13. Optische Disk nach Anspruch 12, wobei die Daten, welche im Wobblesignal enthalten sind, nach dem Modulieren durch mindestens eine Form aus Frequenzmodulation, Amplitudenmodulation, Phasenmodulation und Sägezahnmodulation enthalten sind.

14. Verfahren zum Aufzeichnen von Benutzerdaten auf oder Reproduzieren von Benutzerdaten von einer optischen Disk, die mindestens erste und zweite Aufzeichnungsschichten (L0, L1) hat,
wobei ein Einlaufbereich, der in der inneren Peripherie der ersten Aufzeichnungsschicht (L0) enthalten ist, einen zugeordneten Reproduktionsbereich, in dem die diskbezogenen Informationen für die erste Aufzeichnungsschicht und die zweite Aufzeichnungsschicht aufgezeichnet werden, einen Kontrolldatenbereich für die wiederbeschreibbare Disk, in dem die Daten zum Reproduzieren der Benutzerdaten, die im Datenbereich aufgezeichnet sind, aufgezeichnet werden, und einen Verbindungsbereich zwischen dem zugeordneten Reproduktionsbereich und dem Disk-Kontrolldatenbereich umfasst;
wobei ein Einlaufbereich, der in der äußeren Peripherie der zweiten Aufzeichnungsschicht (L1) enthalten ist, einen zugeordneten Reproduktionsbereich, in dem die diskbezogenen Informationen für die erste Aufzeichnungsschicht und die zweite Aufzeichnungsschicht aufgezeichnet werden, einen Kontrolldatenbereich für die wiederbeschreibbare Disk, in dem die Daten zum Reproduzieren der Benutzerdaten, die im Datenbereich aufgezeichnet sind, aufgezeichnet werden, und einen Verbindungsbereich zwischen dem zugeordneten Reproduktionsbereich und dem Disk-Kontrolldatenbereich umfasst;
wobei das Verfahren durch Folgendes gekennzeichnet ist:
Lesen von diskbezogenen Informationen, entweder vom Einlaufbereich der ersten Aufzeichnungsschicht (L0) oder vom Auslaufbereich der zweiten Aufzeichnungsschicht (L1), durch Lesen der diskbezogenen Informationen für die erste Aufzeichnungsschicht und die zweite Aufzeichnungsschicht, und Daten zum Reproduzieren von Benutzerdaten, die im Disk-Kontrolldatenbereich jeweils der ersten Aufzeichnungsschicht und der zweiten Aufzeichnungsschicht aufgezeichnet sind;
wenn die diskbezogenen Informationen nicht korrekt gelesen werden, Lesen der diskbezogenen Informationen aus einem diskbezogenen Informationsbereich, der entweder im Einlaufbereich der ersten Aufzeichnungsschicht oder dem Auslaufbereich der zweiten Aufzeichnungsschicht gebildet ist; und
auf der Basis der gelesenen diskbezogenen Informationen, Aufzeichnen von Benutzerdaten auf der optischen Disk oder Reproduzieren von Benutzerdaten von der optischen Disk.

15. Aufzeichnungs- und Reproduktionsvorrichtung, die Mittel umfasst, welche zum Ausführen des Verfahrens nach Anspruch 14 ausgelegt ist.

## Revendications

1. Disque optique comprenant au moins une première couche d'enregistrement (L0) et une seconde couche d'enregistrement (L1), dont chacune présente une région d'entrée, une région de données, et une région de sortie,
**caractérisé en ce que** :
la région d'entrée, incluse dans la circonférence intérieure de la première couche d'enregistrement (L0) comprend :
une région de reproduction dédiée dans laquelle sont enregistrées des informations associées au disque concernant à la fois la première couche d'enregistrement (L0) et la seconde couche d'enregistrement (L1),
une région de données de commande de disque réinscriptible dans laquelle sont enregistrées des données de commande destinées à la reproduction de données d'utilisateur enregistrées dans la région de données, et
une zone de connexion entre la région de reproduction dédiée et la zone de données de commande de disque, et la région d'entrée incluse dans la circonférence extérieure de la seconde couche d'enregistrement (L1) comprend :
une région de reproduction dédiée dans laquelle sont enregistrées des informations associées au disque concernant à la fois la première couche d'enregistrement (L0) et la seconde couche d'enregistrement (L1),
une zone de données de commande de disque réinscriptible dans laquelle sont enregistrées des données de commande destinées à la reproduction de données d'utilisateur enregistrées dans la région de données, et
une zone de connexion entre la région de reproduction dédiée et la zone de données de commande de disque.

2. Disque optique selon la revendication 1, dans lequel une zone de test et une zone de gestion de défauts sont formées dans la région réinscriptible.

3. Disque optique selon la revendication 2, dans lequel une zone de gestion de défauts est formée dans la région de sortie de la couche d'enregistrement dont la région d'entrée comporte la zone d'informations associées au disque, ou dans la région d'entrée de la couche d'enregistrement dont la région de sortie comporte la zone d'informations associées au disque.

4. Disque optique selon la revendication 2, dans lequel une piste spirale formée dans la région de données de chaque couche d'enregistrement présente une direction d'enroulement opposée à la direction d'enroulement d'une couche d'enregistrement précédente.

5. Disque optique selon la revendication 3, dans lequel une zone de gestion de défauts est formée dans chacune de la première région de sortie et de la seconde région de sortie.

6. Disque optique selon la revendication 5, dans lequel une zone tampon est formée de manière adjacente à la zone de gestion de défauts dans chacune de la première région de sortie et de la seconde région de sortie.

7. Disque optique selon la revendication 5, dans lequel la première région d'entrée, la première région de données et la première région de sortie sont disposées dans un ordre opposé à celui de la seconde région de sortie, de la seconde région de données et de la seconde région d'entrée, dans la direction radiale du disque.

8. Disque optique selon la revendication 7, dans lequel une zone tampon est formée dans chacune de la première région de sortie et de la seconde région de sortie de manière à ce que la zone tampon soit adjacente à la première région de sortie et à la seconde région de sortie sur un trajet de reproduction.

9. Disque optique selon la revendication 1, dans lequel la région de reproduction dédiée est formée sous forme de pistes d'oscillation dans lesquelles des données correspondant à la région sont enregistrées sous forme de précuvettes, et la zone de données de commande de disque est formée sous forme de pistes d'oscillation dans lesquelles est enregistré un signal d'oscillation contenant des données correspondantes.

10. Disque optique selon la revendication 1, dans lequel la région de reproduction dédiée est formée sous forme d'une région munie de précuvettes dans laquelle des données correspondant à la région sont enregistrées sous forme de précuvettes, et la zone de données de commande de disque est formée de manière à comporter des pistes d'oscillation dans lesquelles est enregistré un signal d'oscillation contenant des données correspondantes.

11. Disque optique selon la revendication 1, dans lequel la région de reproduction dédiée est formée sous forme de pistes d'oscillation dans lesquelles est enregistré un signal d'oscillation contenant des données correspondantes, et les données correspondant à la zone de données de commande de disque sont enregistrées sous forme de repères d'enregistrement dans les pistes d'oscillation de la région de reproduction dédiée.

12. Disque optique selon l'une quelconque des revendications précédentes, dans lequel la région de reproduction dédiée est formée sous forme de pistes d'oscillation à haute fréquence dans lesquelles est enregistré un signal d'oscillation à haute fréquence contenant des données correspondantes, et la zone de données de commande de disque est formée sous forme de pistes d'oscillation à basse fréquence dans lesquelles est enregistré un signal d'oscillation à basse fréquence contenant des données correspondantes.

13. Disque optique selon la revendication 12, dans lequel les données contenues dans le signal d'oscillation sont contenues après avoir été modulées par au moins l'une d'une modulation de fréquence, d'une modulation d'amplitude, d'une modulation de phase et d'une modulation en dents de scie.

14. Procédé d'enregistrement de données d'utilisateur ou de reproduction de données d'utilisateur sur ou depuis un disque optique comportant des première et seconde couches d'enregistrement (L0, L1),
dans lequel une région d'entrée incluse dans la circonférence intérieure de la première couche d'enregistrement (L0) comprend une région de reproduction dédiée dans laquelle sont enregistrées des informations associées au disque concernant à la fois la première couche d'enregistrement et la seconde couche d'enregistrement, une zone de données de commande de disque réinscriptible dans laquelle sont enregistrées les données destinées à la reproduction des données d'utilisateur enregistrées dans la région de données, et une zone de connexion entre la région de reproduction dédiée et la zone de données de commande de disque ;
dans lequel une région d'entrée incluse dans la circonférence extérieure de la seconde couche d'enregistrement (L1) comprend une région de reproduction dédiée dans laquelle sont enregistrées les informations associées au disque concernant à la fois la première couche d'enregistrement et la seconde couche d'enregistrement, une zone de données de commande de disque réinscriptible dans laquelle sont enregistrées des données de commande destinées à la reproduction des données d'utilisateur enregistrées dans la région de données, et une zone de connexion entre la région de reproduction dédiée et la zone de données de commande de disque;
le procédé étant **caractérisé :**
**par** la lecture d'informations associées au disque depuis l'une de la région d'entrée de la première couche d'enregistrement (L0) ou de la région de sortie de la seconde couche d'enregistrement (L1), par lecture des informations associées au disque concernant à la fois la première couche d'enregistrement et la seconde couche d'enregistrement, et de données destinées à la reproduction de données d'utilisateur enregistrées dans la zone de données de commande de disque de la couche respective parmi la première couche d'enregistrement et la seconde couche d'enregistrement ;
si les informations associées au disque ne sont pas lues correctement, par la lecture des informations associées au disque depuis la zone d'informations associées au disque formée sur l'autre de la région d'entrée de la première couche d'enregistrement ou de la région de sortie de la seconde couche d'enregistrement ; et
sur la base des informations associées au disque, par l'enregistrement de données d'utilisateur ou par la reproduction de données d'utilisateur sur ou depuis le disque optique.

15. Appareil d'enregistrement et de reproduction comprenant des moyens aptes à mettre en oeuvre le procédé selon la revendication 14.
